(19) Europäisches Patentamt
European Patent Office
Office européen des brevets

(11) **EP 1 186 869 A2**

(12) **EUROPÄISCHE PATENTANMELDUNG**

(43) Veröffentlichungstag:
**13.03.2002 Patentblatt 2002/11**

(51) Int Cl.[7]: **G01F 23/284**

(21) Anmeldenummer: **01117908.2**

(22) Anmeldetag: **24.07.2001**

(84) Benannte Vertragsstaaten:
**AT BE CH CY DE DK ES FI FR GB GR IE IT LI LU MC NL PT SE TR**
Benannte Erstreckungsstaaten:
**AL LT LV MK RO SI**

(30) Priorität: **06.09.2000 DE 10043838**

(71) Anmelder: **VEGA Grieshaber KG**
**77709 Wolfach (DE)**

(72) Erfinder:
• **Fehrenbach, Josef**
  **77716 Haslach (DE)**
• **Griessbaum, Karl**
  **77796 Mühlenbach (DE)**

(74) Vertreter: **Patentanwälte**
**Westphal, Mussgnug & Partner**
**Waldstrasse 33**
**78048 Villingen-Schwenningen (DE)**

(54) **Füllstandsmessvorrichtung**

(57) Füllstandsmessvorrichtung mit einer Sende- und Empfangseinrichtung (1) und einem mit einem Ende (6a, 7a) an die Sende- und Empfangseinrichtung (1) gekoppelten Wellenleiter (6, 7), welcher mit seinem anderen Ende (6b, 7b) zum Eintauchen in ein Füllgut (11) vorgesehen ist und welchem von der Sende- und Empfangseinrichtung (1) elektromagnetische Wellen zuführbar sind, wobei im Wellenleiter (6, 7) reflektierte elektromagnetische Wellen in der Sende- und Empfangseinrichtung (1) zur Füllstandmessung auswertbar sind, wobei das andere Ende (6b, 7b, 28b) eine Wellenabsorptionsvorrichtung (26, 27, 29, 17, 18, 22) zum zumindest teilweisen Absorbieren der zugeführten elektromagnetischen Wellen aufweist.

Fig. 1

Fig. 1a   Fig. 1b

EP 1 186 869 A2

**Beschreibung**

Die Erfindung betrifft eine Füllstandsmeßvorrichtung, insbesondere zur Bestimmung der Füllhöhe eines Füllguts in einem Behälter, gemäß dem Oberbegriff des Anspruchs 1.

Zur Füllstandsmessung werden ganz allgemein Messsysteme eingesetzt, die auf Grund der gemessenen Laufzeit von elektromagnetischen Wellen von einem in der Behälterdecke montierten Sensor zur Füllgutoberfläche und zurück die Distanz zwischen Sensor und Füllgut bestimmen. Aus der Kenntnis der Behälterhöhe kann dabei die gesuchte Füllstandshöhe berechnet werden.

Solche unter der Fachbezeichnung Füllstandsradar bekannten Sensoren beruhen allesamt auf der Eigenschaft elektromagnetischer Wellen, sich innerhalb eines homogenen nichtleitenden Mediums mit konstanter Geschwindigkeit auszubreiten und an der Grenzfläche unterschiedlicher Medien zumindest teilweise reflektiert zu werden. Jede Grenzschicht zwischen zwei Medien mit unterschiedlichen Dielektrizitätskonstanten erzeugt bei Auftreffen der Welle ein Radarecho. Je größer der Unterschied der beiden Dielektrizitätskonstanten ist, desto stärker ändert sich der Wellenwiderstand der Wellenausbreitung und desto größer ist das zu beobachtende Echo.

Zur Bestimmung der gesuchten Wellenlaufzeit sind unterschiedliche Radarprinzipien bekannt. Die beiden hauptsächlich angewandten Verfahren sind zum einen das Impulslaufzeitverfahren (Pulsradarverfahren) und zum anderen das frequenzmodulierte Dauerstrichverfahren mit konstanter Amplitude (Frequency-Modulated-Continuous Wave-Radar-Verfahren = FMCW Radar-Verfahren). Das Pulsradarverfahren bedient sich der pulsförmigen Amplitudenmodulation der abzustrahlenden Welle und ermittelt die direkte Zeitdauer zwischen Aussendung und Empfang der Pulse. Beim FMCW-Radarverfahren wird die Laufzeit auf indirektem Weg über die Aussendung eines frequenzmodulierten Signals und Differenzbildung zwischen gesendeter und empfangener Momentanfrequenz bestimmt. Weitere Verfahren sind beispielsweise in der DE 44 04 745 C2 beschrieben.

Neben den unterschiedlichen Radarprinzipien werden auch - je nach Anwendung - verschiedene Frequenzbereiche der elektromagnetischen Wellen genutzt. So existieren beispielsweise Pulsradars mit Trägerfrequenzen im Bereich zwischen 5 und 30 GHz und daneben ebenso solche, die im Basisband als sogenannte Monopulsradars ohne Trägerfrequenz arbeiten. Außerdem ist eine Reihe unterschiedlicher Verfahren bekannt, die elektromagnetische Welle auf die Füllgutoberfläche und zurück zu leiten.

Man unterscheidet grundsätzlich zwischen in den Raum abgestrahlter Welle und leitungsgeführter Welle. Radarsensoren, die die elektromagnetische Welle über eine Leitung zum Reflexionsort und zurück führen, werden oft auch als TDR (time domain reflectometry; deutsch: Gleichstrom-Impuls-Reflektometrie) -Sensoren bezeichnet. Diese Sensoren besitzen gegenüber solchen, die hochfrequente Wellen frei abstrahlen, eine wesentlich geringere Dämpfung des reflektierten Echosignals, weil der Leistungsfluss nur in einem eng begrenzten Bereich in der Umgebung längs des leitfähigen Wellenleiters erfolgt. Außerdem werden Störechos aus dem Behälterinneren bei dieser Art von Sensoren weitgehend vermieden. Solche Störechos können z. B. von Reflexionen der Welle an Behältereinbauten (wie z. B. Rührwerke, Rohre etc.) stammen und bei freistrahlenden Sensoren eine Identifikation eines Echosignals von der Füllgutoberfläche erschweren. Dies führt dazu, dass die Füllstandmessung mit geführten elektromagnetischen Wellen weitgehend unabhängig von der Behälterkonstruktion und außerdem von den Produkteigenschaften des Füllguts oder sonstiger Betriebsbedingungen (z. B. Staub, Schüttgutwinkel etc.) ist und deshalb sehr zuverlässige Messergebnisse liefert.

Als Wellenleiter zur Führung der Welle können alle hochfrequenztauglichen Leitungen benutzt werden, bei denen die Welle zumindest teilweise das Medium durchdringt, das die metallischen Leiter umgibt oder von diesen umschlossen wird. Insbesondere die Paralleldrahtleitung, die Eindrahtleitung, die Koaxialleitung und der Hochfrequenz-Hohlleiter haben sich in dieser Beziehung als besonders geeignet erwiesen. Die dafür verwendeten Metallteile der Sonden können dabei entweder aus korrosionsfestem Stahl hergestellt, oder zum Schutz vor aggressiven Füllgütern mit einer Isolationsschicht versehen sein. In der DE 44 04 745 C2 ist ein Füllstandsensor mit geführter Welle beispielhaft beschrieben.

Der Messbereich eines Sensors ist allgemein begrenzt durch die Länge des Wellenleiters, der bei derartigen Vorrichtungen zur Ermittlung des Füllstands eines Füllgutes üblicherweise als Sonde bezeichnet wird. Da die elektronische Sende- und Empfangseinrichtung im Regelfall im Behälterdeckel montiert ist, erstreckt sich die Sonde von der Montageöffnung im Deckel nach unten und endet oberhalb des Behälterbodens. Um auch Füllstände bei geringer Befüllung des Behälters messen zu können, endet die Sonde zweckmäßiger Weise möglichst nahe am Behälterboden. Taucht nun das Sondenende bei geringer Befüllung nur wenige Zentimeter ins Füllgut ein, so ergibt sich zwar - wie zu erwarten - eine Reflexion an der Grenzfläche zum Füllgut, da aber diese Reflexion keine Totalreflexion der gesamten Welle ist, dringt je nach Größe der Dielektrizitätskonstanten des Füllguts ein mehr oder weniger großer Anteil der Welle in das Füllgut ein. Dieser eindringende Anteil trifft auf das Sondenende, welches überlicherweise einen elektrischen Leerlauf darstellt. Bei der ebenfalls zum Teil verwendeten nicht isolierten Abspannung der Sonde (beispielhaft sei hier eine Seilsonde erwähnt) gegen den Behälterboden liegt demgegenüber ein elektrischer Kurzschluss vor. In beiden Fällen reflektiert das Sondenende die ankommende Welle total. Dadurch wird ein zusätzliches Echo erzeugt.

Die Pulsbreite eines Echos ist von der Modulationsbandbreite des modulierten Sendesignals abhängig. Beim Pulsradar zum Beispiel ist diese abhängig von der Pulsbreite des gesendeten Pulses. Wenn also bei geringer Behälterbefüllung von zwei eng benachbarten Reflexionsstellen ( beispielsweise vom Sondenende und von der Füllgutoberfläche) Echos erzeugt werden, können sich diese Echos teilweise zeitlich überlappen. Bei üblichen Pulsbreiten von ca. 10 bis 30 cm, welche Modulationsbandbreiten von ca. 0,75 bis 1,75 GHz entsprechen, überlappen sich die beiden erwähnten Echos so lange, bis das Sondenende um eine Strecke, die der Pulsbreite entspricht, ins Füllgut eingetaucht ist. Eine Separation dieser überlagerten Echoanteile von Reflexionen an der Füllgutoberfläche und von Reflexionen am Sondenende wird bei der Auswertung schwierig und es ergibt sich das Problem, daß die gesuchte Position des Füllguts nicht mehr exakt bestimmbar ist.

Insbesondere bei Füllgütern, bei denen die Dielektrizitätskonstante niedrige Werte aufweist und damit die Amplitude des Füllgutechos klein gegenüber der Amplitude des Echos vom Sondenende ist, wird bei niedrigem Füllstand eine Auswertung des Echos und eine exakte Füllstandsbestimmung nahezu unmöglich.

Aus der EP 0 780 665 A2 ist ein Füllstandssensor bekannt, bei dem Störechos bei leerem Behälter erfasst und gespeichert werden. Durch Subtraktion des Leersignals vom aktuell gemessenen Echosignal werden Störechos eliminiert. Dieses Verfahren ist jedoch nicht geeignet, den Einfluß eines Störechos vom Sondenende zu eliminieren, da sich dieses Echo bei beginnender Befüllung durch die verminderte Ausbreitungsgeschwindigkeit der Welle innerhalb des Füllguts in seiner zeitlichen Folge zum Echo der Füllstandsoberfläche verändert und darüber hinaus durch die Dämpfung im Füllgut in seiner Amplitude reduziert wird. Eine Elimination eines Störsignals durch Subtraktion führt aber nur dann zum Erfolg, wenn eine exakte zeitliche und amplitudenmäßige Zuordnung möglich ist, was im Fall des Störechos vom Sondenende aus den genannten Gründen ausgeschlossen ist.

Die Aufgabe der vorliegenden Erfindung ist es, eine Füllstandsmessvorrichtung vorzustellen, die auch bei niedrigem Füllstand bzw. geringer Eintauchtiefe des Wellenleiters Füllstände korrekt erfasst.

Diese Aufgabe wird erfindungsgemäß gelöst durch eine Füllstandsvorrichtung gemäß dem kennzeichnenden Teil des Anspruchs 1. Vorteilhafte Ausführungen und Weiterbildungen der Erfindung sind in den Unteransprüchen angegeben.

Die grundlegende Idee der Erfindung besteht darin, daß das in das Füllgut eintauchende Ende eine Wellenabsorptionsvorrichtung aufweist, welche zumindest teilweise die zugeführten elektromagnetischen Wellen absorbiert. Auf diese Weise wird erreicht, daß eine bis zum Sondenende laufende elektromagnetische Welle an diesem Ort nur zu einem geringen Teil reflektiert werden kann, so daß eine wirkungsvolle Störechoreduktion eintritt.

Die Art der Wellenabsorptionsvorrichtung hängt von der Art und Konstruktion des Wellenleiters (Sonde) selbst ab, wie folgende Ausführungsbeispiele verdeutlichen:

Bei allen gebräuchlichen Sonden, insbesondere der Eindraht-, der Zweidraht-, der Koaxial- und der Hohlleitersonde kann eine Absorption durch Anbringung eines wellendämpfenden Materials an das Sondenende erreicht werden. Dazu sind verschiedene Materialien für die Hochfrequenztechnik verfügbar, die je nach den unterschiedlichen Frequenzbereichen und erforderlichen Dämpfungen ausgewählt werden können.

Als bevorzugtes Ausführungsbeispiel sei hier ein Material mit einer feinen Verteilung leitfähiger Pigmente innerhalb eines Füllmaterials genannt.

Derartige Vorrichtungen sind sehr einfach herstellbar. Es ist lediglich darauf zu achten, daß ein entsprechend aus diesem Material geformter Körper am Wellenleiterende anbringbar ist. Die Formgebung ist zunächst nicht eingeschränkt, so daß sich eine Anpassung nach Kriterien wie einfache Herstellbarkeit und/ oder mechanische Zweckmäßigkeit richtet.

Als besonders vorteilhaft hat sich herausgestellt, wenn als leitfähige Pigmente Rußpartikel verwendet werden. Derartige Pigmente sind kostengünstig und praktisch in beliebiger Dichte und Größe verfügbar.

Als Füllmaterial wird bevorzugt Silikon verwendet, da dieses ebenfalls kostengünstig erwerblich ist und zum anderen jegliche Formgebung gestattet. Darüber hinaus ist es gegenüber einer Vielzahl von als Füllgut in Betracht kommenden Flüssigkeiten inert.

In einer besonders vorteilhaften Ausführung der Erfindung ist das wellendämpfende Material als kegelförmiger Körper ausgebildet. Dadurch wird erreicht, daß die Dämpfungswirkung über der genauen Position am Wellenleiterende zu- oder abnimmt.

Eine weitere Ausführungsform der Erfindung sieht vor, daß das wellendämpfende Material einen Dämpfungsgradienten aufweist. Dieser wird zum einen dadurch realisiert, daß eine dem gewünschten Dämpfungsverhalten angepaßte Formgebung gewählt wird, daß die Konzentration der Pigmente im Füllmaterial entsprechend gewählt wird oder daß Pigmente unterschiedlicher Leitfähigkeit zur Anwendung kommen.

Bei Zweidraht- und Koaxialsonden ist es alternativ auch möglich, einen ohm'schen Widerstand zwischen die beiden Leitungsenden am Sondenende zu schalten. Der Widerstandswert dieses ohm'schen Widerstandes wird bevorzugt so gewählt, daß er in der Nähe des Wellenwiderstandes der Sonde (Wellenleiter) liegt.

Besonders vorteilhaft ist es, den Widerstandswert etwas kleiner zu wählen als den Wellenwiderstand, den die Sonde besitzt, wenn sie gerade nicht in das Füllgut eingetaucht ist. Dadurch ist gewährleistet, daß bei völlig leerem Behälter am Sondenende ein kleines, auswertbares Echo entsteht, das zur Anzeige des Leerzustandes des Behälters ausgewertet werden kann. Taucht dieses Sondenende in das Füllgut ein, reduziert sich auf Grund der Dielektrizitätskonstanten des Füllguts der Wellenwiderstand des eingetauchten Teils der Sonde. Bei idealer Wahl des Abschlusswiderstands stimmt dieser mit dem Wellenwiderstand der eingetauchten Sonde überein, und die Welle wird vollständig absorbiert.

Als Abschlusswiderstand ist ein hochfrequenztauglicher, induktivitätsarmer SMD-Widerstand vorteilhaft. Außerdem sind auch Widerstandsdrähte oder bedrahtete Widerstände möglich.

Die erfindungsgemäße Füllstandsmessvorrichtung wird im folgenden anhand von bevorzugten Ausführungsbeispielen erläutert. Dabei zeigen:

Figur 1    eine Füllstandsmessvorrichtung mit einer Koaxialsonde gemäß dem Stand der Technik sowie eine Füllstandsmessvorrichtung mit einer Zweidrahtsonde gemäß dem Stand der Technik

Figur 1a)    ein Echosignalprofil bei Betrieb der Füllstandsmessvorrichtungen gemäß der Figur 1 bei leerem Behälter

Figur 1b)    ein Echosignalprofil bei Betrieb der Füllstandsmessvorrichtungen gemäß der Figur 1 bei geringer Behälterbefüllung

Figur 2    Füllstandsmessvorrichtungen gemäß Figur 1 mit Wellenabsorptionsvorrichtungen (erfindungsgemäße Füllstandsmessvorrichtungen)

Figur 2a)    ein Echosignalprofil bei Betrieb der Füllstandsmessvorrichtungen mit Wellenabsorptionsvorrichtungen gemäß Figur 2 bei leerem Behälter

Figur 2b)    ein Echosignalprofil bei Betrieb der erfindungsgemäßen Füllstandsmessvorrichtungen gemäß Figur 2 bei geringer Behälterbefüllung

Figur 3    ein Ausführungsbeispiel einer erfindungsgemäßen Füllstandsmessvorrichtung mit einer Koaxialsonde mit eingebautem Abschlusswiderstand

Figur 4    ein Ausführungsbeispiel einer erfindungsgemäßen Füllstandsmessvorrichtung mit einer Koaxialsonde mit kegelförmig ausgebildetem Dämpfungsmaterial als Wellenabsorptionsvorrichtung

Figur 5    ein Ausführungsbeispiel einer erfindungsgemäßen Füllstandsmessvorrichtung mit einer Koaxialsonde wobei als Wellenabsorptionsvorrichtung ein Dämpfungsmaterial zur Anwendung kommt, bei dem die Dämpfungswirkung graduell zunimmt

Figur 6    ein Beispiel einer Hohlleitersonde mit einem aus Dämpfungsmaterial bestehendem Körper am Sondenabschluss

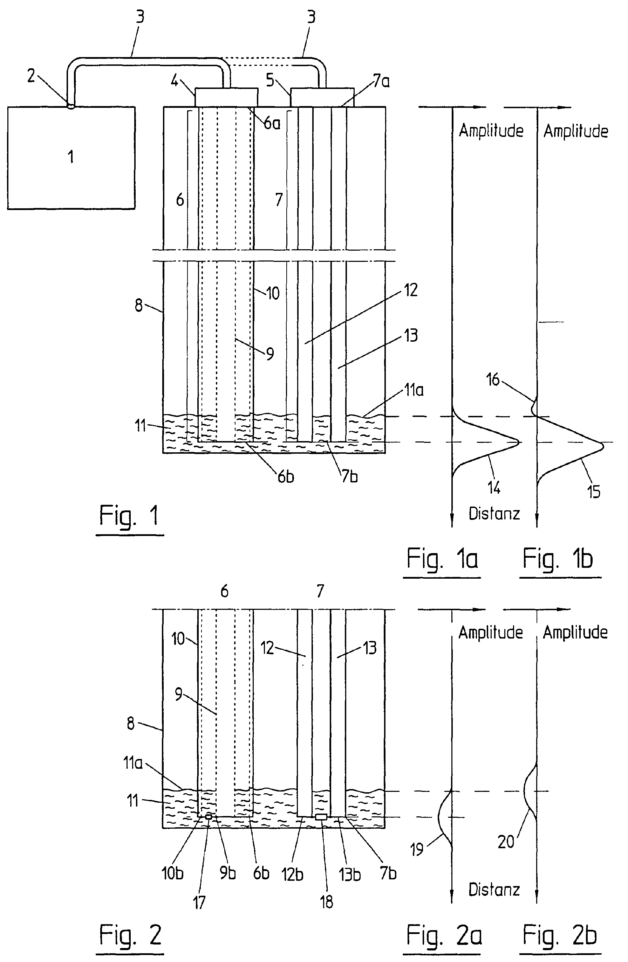

Die in Figur 1 dargestellten Füllstandsmessvorrichtungen gemäß dem Stand der Technik weisen eine Sende- und Empfangseinrichtung 1 mit einem Ausgang 2 auf, der beispielsweise über ein Koaxialkabel 3 mit einem Übergangselement 4 (oder 5) verbunden ist, der das Sende- und Empfangssignal in einen entsprechenden Wellenleiter (Sonde) 6 (oder 7) ein- bzw. auskoppelt. Der Wellenleiter 6 (oder 7) ist in einen Füllgutbehälter 8 eingebaut.

Beispielshaft sind zwei mögliche Sondenkonstruktionen skizziert:

Auf der linken Seite der Figur 1 ist eine Koaxialsonde 6, bestehend aus einem stabförmigen Innenleiter 9 und einem rohrförmigen Außenleiter 10 dargestellt. Wird der Füllgutbehälter mit flüssigem Füllgut 11 befüllt, so taucht wie in der Figur 1 schematisch angedeutet ist, die Koaxialsonde 6 in diese Flüssigkeit 11 ein. Dabei füllt das flüssige Füllgut 11 den Zwischenraum zwischen Innen- und Außenleiter 9 und 10 aus.

Auf der rechten Seite der Figur 1 ist eine Zweidrahtsonde 7 bestehend aus zwei in definiertem Abstand zueinander angeordneten Einzeldrähten 12 und 13 gezeigt.

Beide Sonden 6 bzw. 7 weisen im nicht eingetauchten Zustand einen Wellenwiderstand $Z_{Luft}$ auf, der von der Konstruktion der jeweiligen Sonde 6 bzw. 7 abhängt, und gewöhnlich zwischen 50Ω und 300Ω liegt. Bei in das Füllgut eingetauchter Sonde 6,7 erniedrigt sich der Wellenwiderstand Z des eingetauchten Abschnittes um den Kehrwert der Quadratwurzel der Dielektrizitätskonstanten $\in_{r,Füllgut}$ des Füllguts 11.

Nach dem Stand der Technik werden die Sonnenenden 6b und 7b in beiden Fällen im elektrischen Leerlauf betrieben. Für den Fall, dass die Sende- und Empfangseinrichtung 1 nach dem Puls-Laufzeit-Verfahren arbeitet und sehr kurze positive Gleichspannungs-Impulse aussendet, ergeben sich füllstandsabhängig Echosignalprofile, wie sie beispielhaft in den Figuren 1a und 1b dargestellt sind. Die Polarität der empfangenen Echopulse richtet sich danach, ob sich der Wellenwiderstand Z an der Reflexionsstelle zu einem niedrigeren oder höheren Wert ändert. Bei Änderung zu einem niedrigeren Wert wird die Polarität des Pulses invertiert, bei Änderung zu einem höheren Wert nicht. Die Amplitude des Echopulses hängt von der Wellenwiderstandsänderung an der reflektierten Stelle ab, wobei eine große Änderung eine große Echosignalamplitude hervorruft.

Das Echosignalprofil gemäß Figur 1a ergibt sich bei völlig leerem Behälter. Ein Echosignal 14 des leerlaufenden Sondenendes 6b,7b weist positive Polarität auf. Die Pulsbreite des Echosignals 14 beträgt beispielhaft 15 cm, wobei dieser Wert der Breite des Echosignals 14 bei halber Maximalamplitude entspricht.

Bei geringer Behälterfüllung, wie in Figur 1 durch die Füllgut oberfläche 11a angedeutet ist, erhält man ein Echosignalprofil gemäß der Figur 1b. Dargestellt ist ein Echosignal 15 bei einer Reflexion am Sondenende 6b, 7b, das durch das Füllgut 11 im Vergleich zum Echosignal 14 gedämpft und auf Grund der im Füllgut 11 verringerten Ausbreitungsgeschwindigkeit geringfügig zeitlich verzögert ist. Außerdem ist additiv ein Echosignal 16 geringer Amplitude überlagert, welches von einer Reflexion der einlaufenden elektromagnetischen Welle an der Füllgutoberfläche 11a stammt. Eine Bestimmung und Auswertung dieses Echosignals 16 ist - wenn überhaupt - nur sehr ungenau möglich.

Erfindungsgemäße Füllstandsmessvorrichtungen sind in der Figur 2 dargestellt. Der in der Figur 2 dargestellte Ausschnitt beschränkt sich auf die Teile der Vorrichtungen, welche sich von den in der Figur 1 gezeigten Füllstandsmessvorrichtungen gemäß dem Stand der Technik unterscheiden.

Die eingangs beschriebenen leerlaufenden Sondenenden 6b, 7b sind erfindungsgemäß mit ohm'schen Widerständen 17 und 18 abgeschlossen, welche zwischen den jeweiligen Leiterenden 9b, 10b bzw. 12b, 13b der beiden Leiter 9 und 10 bzw. 12 und 13 angeordnet sind.

Die Dimensionierung der Widerstände 17 und 18 erfolgt nach folgenden Kriterien:

Idealerweise ist der Wert R der Abschlusswiderstände 17, 18 identisch mit dem Wellenwiderstand Z der eingetauchten Sonden 6 bzw. 7. Dieser Wert Z hängt jedoch von der Dielektrizitätskonstanten $\varepsilon_{r'\ Füllgut}$ des Füllguts 11 ab, d. h. er ist für jeden Anwendungsfall verschieden. Einen guten Kompromiss erreicht man, wenn man sich bei der Wahl des Widerstandswertes R an Füllgütern 11 orientiert, welche niedrige Dielektrizitätskonstanten $\varepsilon_{r,Füllgut}$ im Bereich von ca. 1,8 bis 2,8 aufweisen. Bei diesen ist auf Grund der geringen Dämpfung der Welle innerhalb des Füllguts 11 der störende Einfluss des Echos vom Sondenende besonders ausgeprägt. Als Widerstandswert R ergibt sich damit der Wellenwiderstand $Z_{Luft}$ der Sonde 6, 7 in Luft multipliziert mit dem Kehrwert der Quadratwurzel der Dielektrizitätskonstanten $\varepsilon_{r'Fülllgut}$:

$$R = Z_{Luft} * (0,6 \ ... \ 0,75) \qquad (1)$$

Verwendet man beispielsweise eine Koaxialsonde 6 mit einem Wellenwiderstand $Z_{Luft} = 50\Omega$, so empfiehlt sich ein Abschlusswiderstand 17 mit einem Wert von R= 30Ω bis R= 38Ω.

Das entsprechende Empfangssignalprofil der in Figur 2 gezeigten Sonden 6,7 ist in den Figuren 2a und 2b dargestellt. Figur 2a zeigt ein Echosignalprofil 19 bei leerem Behälter 8. Es ist vorteilhaft, dass in diesem Fall das Sondenende 6b,7b ein kleines Echosignal 19 erzeugt, damit die Sende- und Empfangseinrichtung 1 den Leerzustand des Behälters 8 erkennen kann. Wäre überhaupt kein Echo vorhanden, würde sich dieser Zustand z. B. nicht von einem möglichen Fehlerzustand des Sensors unterscheiden.

In Figur 2b ist das Echosignalprofil bei geringer Befüllung des Behälters 8 mit Füllgut 11, - wie in Figur 2 gezeigt - dargestellt. Ein Echosignal des Sondenendes 6b,7b ist nicht mehr detektierbar, da der eingetauchte Teil der Sonde 6,7 mit einem Abschlusswiderstand 17,18 abgeschlossen ist, dessen Wert R dem Wellenwiderstand Z entspricht. Übrig bleibt das Echosignal 20 von der Füllgutoberfläche 11a, das zwar klein aber ungestört und deshalb in seiner Position exakt bestimmbar ist.

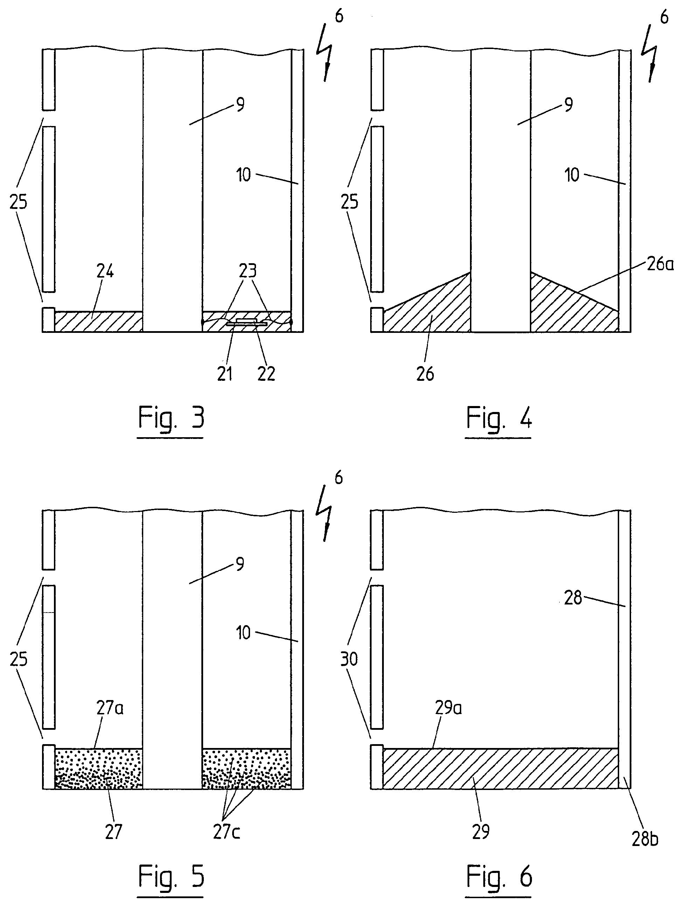

In Figur 3 ist am Beispiel einer Koaxialsonde 6 im Schnittbild gezeigt, wie ein derartiger Abschlusswiderstand an einem Sondenende 6b angebracht werden kann. Mit den Enden der metallisch leitenden Innenleiter 9 und Außenleiter 10 ist ein auf einer kleinen Platine 21 aufgelöteter SMD-Widerstand 22 (SMD= surface mounted device) über Leitungen 23 verbunden. Zum mechanischen Schutz der Konstruktion ist der Bereich des Sondenendes 6b einige Millimeter hoch mit isolierender Vergussmasse 24 gefüllt. Ausgleichsöffnungen 25 im Außenleiter 10 ermöglichen, dass das zu messende Füllgut 11 innerhalb und außerhalb der Sonde 6 den gleichen Pegel einnimmt.

Die Figuren 4 und 5 zeigen im Schnittbild die Enden zweier Koaxialsonden 6, welche Wellenabsorptionseinrichtungen bestehend aus Schichten mit stark wellendämpfendem Material 26,27 aufweisen. Zur besseren Anpassung an die auftreffende Welle ist das wellendämpfende Material 26 in Figur 4 als kegelförmiger Körper 26a um den Innenleiter 9 geformt. Die in Figur 5 dargestellte Wellenabsorptionseinrichtung ist als zylinderförmiger Körper 27a, Innenleiter 9 und Außenleiter 10 verbindend, ausgestaltet. Der zylinderförmige Körper 27a besteht aus wellendämpfendem Material 27, welches ebenfalls zur besseren Anpassung an die Welle einen Gradienten bezüglich der Konzentration der darin verteilten Dämpfungspigmente 27 aufweist. Die Konzentration der Dämpfungspigmente 27c nimmt in Richtung auf die Leiterenden 9b,10b zu.

In Figur 6 ist das Ende 28b einer runden Hohlleitersonde 28 im Schnittbild dargestellt. Dieses Ende 28b ist zur Absorption der Hohlleiterwelle mit wellendämpfendem Material 29 gefüllt. Auch hier sorgen Ausgleichsöffnungen 30 in den Wandungen des Hohlleiters 28 dafür, dass das Füllgut 11 in den Hohlleiter 28 gelangen kann.

Die vorliegende Erfindung ist nicht auf diese eben ausgeführten Beispiele beschränkt, sondern lässt sich allgemein für alle möglichen Arten von Wellenleitern zur Führung von elektromagnetischen Wellen anwenden.

Bezugszeichenliste

| 1 | Sende- und Empfangseinrichtung |
|---|---|
| 2 | Ausgang |
| 3 | Koaxialkabel |
| 4 | Übergangselement |
| 5 | Übergangselement |
| 6 | Koaxialsonde |
| 6a | ein Ende |
| 6b | anderes Ende |
| 7 | Zweidrahtsonde |
| 7a | ein Ende |
| 7b | anderes Ende |
| 8 | Füllgutbehälter |
| 9 | Innenleiter |
| 9b | anderes Innenleiterende |
| 10 | Außenleiter |
| 10b | anderes Außenleiterende |
| 11 | Füllgut |
| 11a | Füllgutoberfläche |
| 12 | erster Einzeldraht |
| 12b | anderes Ende des ersten Einzeldrahtes |
| 13 | zweiter Einzeldraht |
| 13b | anderes Ende des zweiten Einzeldrahtes |
| 14 | Echosignal leerlaufendes Sondenende |
| 15 | Echosignal Sondenende |
| 16 | Echosignal Füllgutoberfläche |
| 17 | ohm'scher Widerstand |
| 18 | ohm'scher Widerstand |
| 19 | Echosignal Sondenende |
| 20 | Echosignal Füllgutoberfläche |
| 21 | Platine |
| 22 | SMD-Widerstand |
| 23 | Leitungen |
| 24 | Vergußmasse |
| 25 | Ausgleichsöffnung |
| 26 | wellendämpfendes Material |
| 26a | kegelförmiger Körper |
| 27 | wellendämpfendes Material |
| 27a | zylindrischer Körper |
| 27b | Pigment |
| 28 | Hohlleitersonde |
| 28b | Ende der Hohlleitersonde |
| 29 | wellendämpfendes Material |
| 29a | zylindrischer Körper |
| 30 | Ausgleichsöffnung |
| $\varepsilon_{r, Füllgut}$ | Dielektrizitätkonstante des Füllguts |
| R | Widerstandswert |
| Z | Wellenwiderstand |
| $Z_{Luft}$ | Wellenwiderstand ohne Befüllung |

**Patentansprüche**

1. Füllstandsmeßvorrichtung mit einer Sende- und Empfangseinrichtung (1) und einem mit einem Ende (6a, 7a) an die Sende- und Empfangseinrichtung (1) gekoppelten Wellenleiter (6,7), welcher mit seinem anderen Ende (6b,7b) zum Eintauchen in ein Füllgut (11) vorgesehen ist und welchem von der Sende- und Empfangseinrichtung (1) elektromagnetische Wellen zuführbar sind, wobei im Wellenleiter (6,7) reflektierte elektromagnetische Wellen in der Sende- und Empfangseinrichtung(1) zur Füllstandsmessung auswertbar sind, **dadurch gekennzeichnet, dass** das andere Ende (6b,7b,28b) eine Wellenabsorptionsvorrichtung (26,27,29,17,18,22) zum zumindest teilweisen Absorbieren der zugeführten elektromagnetischen Wellen aufweist.

2. Füllstandsmeßvorrichtungen nach Anspruch 1, **dadurch gekennzeichnet, dass** der Wellenleiter (6,7) eine Eindraht-, eine Zweidraht- (7), eine Koaxial- (6) oder eine Hohlleitersonde (28) ist und daß die Wellenabsorptionsvorrichtung ein an dem anderen Ende (6b,7b,28b) angeordneter Körper (26a,27a,29a) aus wellendämpfendem Material (26, 27,29) ist.

3. Füllstandsmeßvorrichtung nach Anspruch 2, **dadurch gekennzeichnet, dass** das wellendämpfende Material (26,27,29) eine Mischung aus leitfähigen Pigmenten (27c) eingebettet in ein isolierendes Füllmaterial ist.

4. Füllstandsmeßvorrichtung nach Anspruch 3, **dadurch gekennzeichnet, dass** die leitfähigen Pigmente (27c) Rußpigmente sind.

5. Füllstandsmeßvorrichtung nach Anspruch 3 oder 4, **dadurch gekennzeichnet, dass** das Füllmaterial Silikon ist.

6. Füllstandsmeßvorrichtung nach einem der Ansprüche 2 bis 5, **dadurch gekennzeichnet, dass** das wellendämpfende Material (26) an dem Leiterende (9b,10b) einen zylindrischen oder kegelförmigen Körper (26a,27a,29a) ausbildet.

7. Füllstandsmeßvorrichtung nach einem der Ansprüche 2 bis 6, **dadurch gekennzeichnet, dass** das wellendämpfende Material (27) einen Dämpfungsgradienten aufweist.

8. Füllstandsmeßvorrichtung nach Anspruch 1, **dadurch gekennzeichent,** dass der Wellenleiter eine Zweidraht- (7) oder eine Koaxialsonde (6) ist und dass die Wellenabsorptionsvorrichtung ein zwischen den beiden Leitungsenden (9,10;12,13) der Sondenenden (6a,7a) angeordneter im wesentlichen ohm'scher Widerstand (17,18,22) ist.

9.  Füllstandsmeßvorrichtung nach Anspruch 8, **dadurch gekennzeichnet, dass** der Widerstandswert (R) des ohm'schen Widerstandes (17,18,22) wenigstens annähernd dem Wellenwiderstand (Z) des in das Füllgut (11) eingetauchten Wellenleiters (6,7) entspricht.

10. Füllstandsmeßvorrichtung nach Anspruch 8 oder 9, **dadurch gekennzeichnet, dass** der Widerstandswert (R) des ohm'schen Widerstandes (17,18,22) wenigstens annähernd dem 0,6 bis 0,75-fachen des Wellenwiderstandes ($Z_{Luft}$) des nicht in das Füllgut (11) eingetauchten Wellenleiters (6,7) entspricht.

11. Füllstandsmeßvorrichtung nach einem der Ansprüche 8 bis 10, **dadurch gekennzeichnet, dass** der ohm'sche Widerstand ein SMD-Widerstand (22) ist.

12. Füllstandsmeßvorrichtung nach einem der Ansprüche 8-11, **dadurch gekennzeichnet, dass** der ohm'sche Widerstand (22) in Vergußmasse (24) eingebettet ist.

Fig. 1

Fig. 1a    Fig. 1b

Fig. 2

Fig. 2a    Fig. 2b

Fig. 3

Fig. 4

Fig. 5

Fig. 6